# EUROPÄISCHE PATENTSCHRIFT

(11) **EP 1 651 483 B1**
(45) Veröffentlichungstag und Bekanntmachung des Hinweises auf die Patenterteilung: **21.02.2007**
(21) Anmeldenummer: 04763563.6
(22) Anmeldetag: 28.07.2004
(51) Int. Cl.: B60T 8/00, B60T 8/26, F16D 65/00

(54) **GERÄUSCHREDUZIERTE FAHRZEUGBREMSANLAGE**
NOISE-REDUCED VEHICLE BRAKING SYSTEM
SYSTEME DE FREINAGE DE VEHICULE AVEC REDUCTION DES BRUITS

(30) Priorität: 04.08.2003 DE 10335616
(43) Veröffentlichungstag der Anmeldung: 03.05.2006
(73) Patentinhaber: Lucas Automotive GmbH, 56070 Koblenz (DE)
(72) Erfinder: KINGSTON, Andrew William, 56323 Waldesch (DE); STRAUB, Thomas, 56179 Vallendar (DE); OLIVERI, Salvatore, 56341 Filsen (DE)
(74) Vertreter: Röthinger, Rainer
(86) Internationale Anmeldenummer: PCT/EP2004/008446
(87) Internationale Veröffentlichungsnummer: WO 2005/016718

(56) Entgegenhaltungen:
- WO-A-92/07742
- DE-A- 19 804 676
- DE-C- 19 935 375
- DE-C- 19 947 757
- US-A- 5 108 159

## Beschreibung

### Gebiet der Erfindung

Die Erfindung betrifft ein Verfahren zum automatischen Unterdrücken oder Verhindern von Geräuschentwicklungen beim Betätigen einer zwei- oder mehr Radbremsen umfassenden Fahrzeugbremsanlage. Die Erfindung betrifft weiterhin eine geräuschreduzierte Fahrzeugbremsanlage.

### Hintergrund der Erfindung

Es ist allgemein bekannt, dass beim Betätigen einer Fahrzeugbremsanlage oftmals Geräusche auftreten, die als unangenehm empfunden werden. Beispielhaft genannt sei das bei bestimmten Betriebszuständen der Fahrzeugbremsanlage auftretende Quietschen.

Es sind verschiedene Vorhergehensweisen bekannt, um die mit dem Betätigen einer Fahrzeugbremsanlage einhergehenden, störenden Geräusche zu reduzieren oder gar nicht erst entstehen zu lassen. Da viele Geräuschentwicklungen bei Fahrzeugbremsanlagen auf Resonanzeffekte zurückzuführen sind, wurde beispielsweise vorgeschlagen, zusätzliche Massen im Bereich der Radbremsen anzuordnen. Mittels der zusätzlichen Massen lassen sich kritische Resonanzfrequenzen in Bereiche verschieben, die bei einer Betätigung der Fahrzeugbremsanlage nicht oder nur in Ausnahmesituationen erreicht werden.

Das Vorsehen zusätzlicher Massen im Bereich der Radbremsen wird im Allgemeinen als nachteilig empfunden. Grund hierfür ist zum einen die Tatsache, dass die zusätzlich vorgesehenen Massen zum Verschieben der Resonanzfrequenzen die gesamte ungefederte Masse des Kraftfahrzeugs vergrößern. Außerdem ist die Ermittlung der Resonanzfrequenzen und das Auffinden geeigneter Position für das Anbringen der zusätzlichen Massen während der Bremsenentwicklung mit hohem Aufwand verbunden.

Aus der WO 92/07742 ist ein Verfahren zum Unterdrücken von Geräuschentwicklungen bei einer Fahrzeugbremsanlage bekannt. Bei der Fahrzeugbremsanlage ist jedem Rad ein Vibrationssensor zugeordnet.

Die Vibrationssensoren ermöglichen das Erfassen von Vibrationen (und daraus resultierenden Geräuschen) als Folge des in Anlagegelangens der Bremsbacken an eine Bremsscheibe. Sobald die Vibrationen eine Grenzfrequenz von 8 Hz überschreiten, wird mittels geeigneter Steuersignale der Druck eines Bremsfluids mit einer vorbestimmten Frequenz moduliert. Offensichtlich sind derartige Druckmodulationen geeignet, die beim Erzeugen der Bremskräfte auftretenden Vibrationen zu reduzieren und die mit den Vibrationen verbundenen Geräusche zu verringern.

Aus der DE 198 04 676 A1 ist ein weiteres Verfahren zum Verhindern von Geräuschentwicklungen bei einer Fahrzeugbremsanlage bekannt. Bei diesem Verfahren werden das Auftreten von Geräuschen messtechnisch erfasst und die auftretenden Geräusche in Übereinstimmung mit der Lehre der WO 92/07742 durch Modulation des Bremsdrucks an einer, an mehreren oder an allen Radbremsen eliminiert. An Stelle einer pulsierenden Druckmodulation kann auch eine geringfügige Druckanhebung der Druckabsenkung eingeregelt werden. Falls Geräusche an mehreren oder an allen Radbremsen auftreten, kann an den Radbremsen einer der Fahrzeugachsen der Bremsdruck angehoben und gleichzeitig der Bremsdruck an den Radbremsen einer weiteren Fahrzeugachse abgesenkt werden.

Der Erfindung liegt die Aufgabe zugrunde, ein effizientes Verfahren zum Unterdrücken oder Verhindern von Geräuschentwicklungen beim Betätigen einer zwei- oder mehr Radbremsen umfassenden Fahrzeugbremsanlage anzugeben. Der Erfindung liegt ferner die Aufgabe zugrunde, eine Fahrzeugbremsanlage anzugeben, die das Durchführen eines derartigen Verfahrens gestattet.

### Kurze Beschreibung der Erfindung

Erfindungsgemäß wird zum automatischen Unterdrücken oder Verhindern von Geräuschentwicklungen beim Erzeugen von Bremskräften mittels der Radbremsen einer Fahrzeugbremsanlage vorgeschlagen, einen oder mehrere Parameter zu erfassen, die einen Rückschluss auf eine Geräuschentwicklung gestatten, den oder die Parameter zur Erkennung des Auftretens oder des bevorstehenden Auftretens von Geräuschen auszuwerten und eine Bremskraftverteilung dann zu ändern, wenn die Auswertung das Auftreten oder das bevorstehende Auftreten von Geräuschen erkennen lässt. Das Ändern der Bremskraftverteilung zwischen den Radbremsen erfolgt derart, dass eine von einem Fahrer gewünschte oder von einem Regelsystem eingestellte Fahrzeugverzögerung beibehalten wird.

Zum Unterdrücken von Geräuschen oder zum Verhindern des Entstehens von Geräuschen wird daher erfindungsgemäß gezielt Einfluss auf die Bremskraftverteilung genommen. Dies geschieht zweckmäßigerweise derart, dass die eine oder mehreren Radbremsen, im Bereich derer eine Geräuschentwicklung auftritt oder zu erwarten ist, abweichend von dem üblichen oder geplanten Betätigungsverlauf derart betätigt werden, dass der Geräuschentwicklung entgegengewirkt wird.

Um zu verhindern, dass mit dem geänderten Betätigungslauf einer oder mehrerer der Radbremsen eine für den Fahrer unter Umständen überraschende Änderung der Fahrzeugverzögerung einhergeht, kann eine Bremskraftumverteilung derart erfolgen, dass sich die Summe aller Bremskräfte trotz des geänderten Betätigungsverlaufs einer oder mehrerer der Radbremsen nicht ändert. Die Randbedingung einer Beibehaltung der gewünschten Fahrzeugverzögerung trotz eines Eingriffes in den Betätigungsverlauf einer oder mehrerer der Radbremsen führt in der Regel zu einer Änderung der Bremskraftverteilung zwischen der Gesamtheit der Radbremsen im Vergleich zu einer Bremsung ohne diesen einer Geräuschentwicklung entgegenwirkenden Eingriff.

Von der geänderten Bremskraftverteilung kann auch eine solche Radbremse umfasst sein, an der keine Geräuschentwicklung auftritt oder zu erwarten ist. Bei einer von der Geräuschentwicklung betroffenen Radbremse kann eine Änderung der (standardmäßigen) Bremskraftverteilung damit einhergehen, dass der Bremsdruck bei Auftreten oder bevorstehendem Auftreten der Geräuschentwicklung nicht weiter erhöht, das heißt begrenzt wird.

Der mindestens eine, einen Rückschluss auf mögliche Geräuschentwicklungen gestattende Parameter wird vorzugsweise hinsichtlich des Vorliegens oder des Eintretens einer kritischen Bedingung ausgewertet. Die kritische Bedingung kann beispielsweise das Erreichen oder Überschreiten eines Schwellenwerts sein. Ferner ist es denkbar, dass die kritische Bedingung derart definiert ist, dass der mindestens eine Parameter innerhalb eines kritischen Parameterbereichs liegt. Falls mehrere Parameter zur Erkennung des Auftretens oder bevorstehenden Auftretens von Geräuschen herangezogen werden, kann die kritische Bedingung für jeden Parameter einzeln oder aber gemeinsam für ein Parameter-Konglomerat definiert werden.

Zweckmäßigerweise wird dann, wenn die kritische Bedingung erfüllt ist oder deren Eintreten bevorsteht, die Bremskraftverteilung geändert. Die Änderung der Bremskraftverteilung kann darauf gerichtet sein, dass die kritische Bedingung nicht mehr erfüllt wird oder deren Eintritt verhindert wird.

Bei aufeinanderfolgenden, geräuschbedingten Änderungen der Bremskraftverteilung ist es zweckmäßig, die Bremskraft an einer der Radbremsen oder Achsen im Allgemeinen abwechselnd zu erhöhen und zu erniedrigen. Auf diese Weise lässt sich ein ungleichmäßiger Verschleiß vermeiden. Zweckmäßigerweise sind von den alternierenden Bremskraftänderungen jeweils diejenigen Radbremsen oder Achsen betroffen, an denen keiner Geräuschentwicklung entgegengewirkt werden muss.

Zum Ändern der Bremskraftverteilung kann eine zusätzliche Steuer- und/oder Regeleinrichtung vorgesehen werden. Vorzugsweise wird zu diesem Zweck jedoch auf eine bereits vorhandene und auch für andere Zwecke vorgesehene Bremsdruck-Regeleinrichtung zurückgegriffen. Beispielhaft genannt seien in diesem Zusammenhang die Regeleinrichtungen eines Antiblockiersystems (ABS), einer Antriebsschlupfregelung (ASR) oder eines elektronischen Stabilitätsprogramms (ESP).

Das Ändern der Bremskraftverteilung kann auf unterschiedliche Art und Weise geschehen. So ist es denkbar, ein Kennfeld oder mehrere Kennfelder heranzuziehen, um im Fall des Auftretens oder des bevorstehenden Auftretens von Geräuschen eine vorbestimmte Bremskraftverteilung oder einen vorbestimmten Bremskraftverteilungsverlauf anzusteuern. Die Bremskraftverteilung kann auf geregelte Weise unter Berücksichtigung einer aus der geänderten Bremskraftverteilung resultierenden Änderung des mindestens einen erfassten Parameters erfolgen (closed-loop control).

Verschiedene Parameter können zur Erkennung des Auftretens oder des bevorstehenden Auftretens von Geräuschen erfasst und ausgewertet werden. Wesentlich ist hierbei, dass der oder die berücksichtigten Parameter einzeln oder in Kombination einen Rückschluss auf eine Geräuschentwicklung gestatten. Als erfindungsgemäß geeigneter Parameter kann beispielsweise das Ausgangssignal eines Geräuschsensors oder eines Schwingungssenors herangezogen werden. Mittels eines Geräuschsensors (z. B. eines Mikrofons) wird die Geräuschentwicklung unmittelbar erfasst.

Dies bedeutet, dass Geräusche bereits entstanden und daher detektierbar sind. Die Erfindung ist in diesem Fall auf ein Unterdrücken der Geräusche oder einer weiteren, stärkeren Geräuschentwicklung gerichtet.

Als weiteres Beispiel für erfindungsgemäß geeignete Parameter können Radumfangsgeschwindigkeit und/oder zugehörige Radbremskraft genannt werden. In der Praxis hat sich gezeigt, dass im Bereich einer Radbremse bei kritischen Kombinationen von Radumfangsgeschwindigkeit und Radbremskraft mit einer unerwünschten Geräuschentwicklung zu rechnen ist. Im Fall der Erfassung und Auswertung von Radumfangsgeschwindigkeit und zugehöriger Radbremskraft ist es oftmals möglich, bereits das Entstehen unerwünschter Geräusche zu verhindern.

Vorzugsweise erfolgt das Erfassen oder das Auswerten oder sowohl das Erfassen als auch das Auswerten des mindestens einen Parameters radbezogen, das heißt für jedes Rad einzeln. Es ist jedoch auch möglich, einen achsbezogenen Ansatz zu wählen. Das Ändern der Bremskraftverteilung kann achsbezogen erfolgen. Eine radbezogene Änderung der Bremskraftverteilung ist jedoch ebenfalls denkbar.

Eine zur Durchführung des erfindungsgemäßen Verfahrens geeignete Fahrzeugbremsanlage umfasst zwei oder mehr separat ansteuerbare Radbremsen, mindestens einen Sensor zur Erfassung mindestens eines Parameters, der einen Rückschluss auf eine Geräuschentwicklung gestattet, eine Auswerte-Einrichtung zur Auswertung des mindestens eines Parameters hinsichtlich des Auftretens oder bevorstehenden Auftretens von Geräuschen sowie eine Befehlserzeugungs-Einrichtung. Die zuletzt genannte Einrichtung erzeugt Befehle zum Ändern einer Bremskraftverteilung z.B. zwischen den Radbremsen, falls die Auswertung das Auftreten oder das bevorstehende Auftreten von Geräuschen erkennen lässt. Wie bereits erwähnt, erfolgt die Änderung der Bremskraftverteilung unter Beibehaltung einer gewünschten oder eingestellten Fahrzeugverzögerung.

Die erfindungsgemäße Fahrzeugbremsanlage kann als herkömmliche hydraulische Bremsanlage ausgestaltet sein oder auf dem Prinzip des brake-by-wire basieren. Gemäß diesem Prinzip wird der Bremswunsch eines Fahrers auf elektrischem oder elektronischem Weg, also nicht hydraulisch, einer Aktuatoreinheit für die Radbremsen zugeführt. Dies ist beispielsweise bei sogenannten elektrohydraulischen Bremsanlagen (EHB) oder elektromechanischen Bremsanlagen (EMB) der Fall.

Die Befehlserzeugungs-Einrichtung der erfindungsgemäßen Fahrzeugbremsanlage kann eine eigens zum Zweck des Unterdrückens oder Verhinderns von Geräuschentwicklungen vorgesehene Einrichtung sein. Vorzugsweise wird die Funktionalität der Befehlserzeugungs-Einrichtung jedoch von einer bereits vorhandenen Bremsdruck-Regeleinrichtung erfüllt, die auch für andere Zwecke wie ABS, ASR oder ESP vorgesehen ist.

### Kurze Beschreibung der Zeichnungen

Weitere Vorteile und Einzelheiten der Erfindung ergeben sich aus der nachfolgenden Beschreibung bevorzugter Ausführungsbeispiele sowie den Zeichnungen. Es zeigen:
Figur 1 ein erstes Ausführungsbeispiel einer erfindungsgemäßen Fahrzeugbremsanlage;
Figur 2 ein schematisches Diagramm betreffend die erfindungsgemäße Änderung der Bremskraftverteilung zwischen einer Hinterachse und einer Vorderachse eines Kraftfahrzeugs; und
Figur 3 ein zweites Ausführungsbeispiel einer erfindungsgemäßen Fahrzeugbremsanlage.

### Beschreibung bevorzugter Ausführungsbeispiele

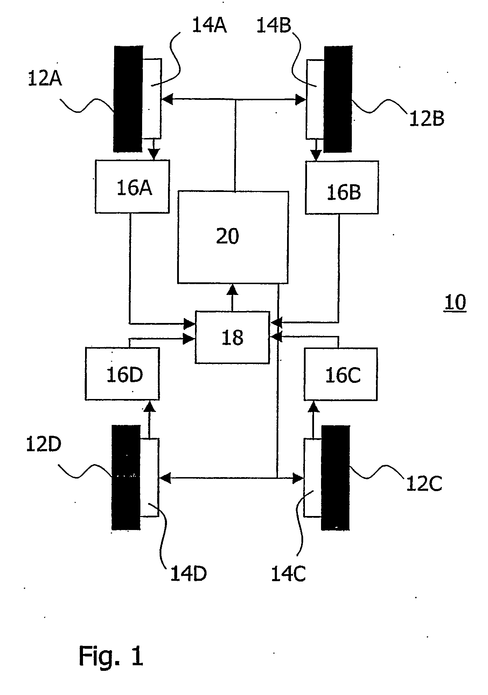

In Figur 1 ist ein erstes Ausführungsbeispiel einer erfindungsgemäßen Fahrzeugbremsanlage 10 dargestellt. Die erfindungsgemäße Fahrzeugbremsanlage 10 ist zum Zusammenwirken mit vier Rädern 12A, 12B, 12C, 12D eines Kraftfahrzeugs ausgebildet. Die beiden Räder 12A und 12B sind an der Vorderachse (VA) des Kraftfahrzeugs und die beiden Räder 12C und 12D an der Hinterachse (HA) angeordnet.

Die erfindungsgemäße Fahrzeugbremsanlage 10 umfasst pro Rad 12A...12D je eine Radbremse 14A...14D. Die Radbremsen 14A...14D basieren im Beispielfall auf einem hydraulischem Funktionsprinzip. Dies bedeutet, dass die Bremskrafterzeugung auf der Erzeugung eines Hydraulikdrucks im Bereich der einzelnen Radbremsen 14A...14D basiert. Der Hydraulikdruck, auch Bremsdruck genannt, kann gemäß dem Prinzip des brake-by-wire mittels einer Hydraulikpumpe oder auf herkömmliche Weise vom Fahrer unter Verwendung eines Hauptbremszylinders aufgebaut werden. Der Bremsdruck kann radweise oder achsweise aufgebaut werden.

Wie Figur 1 entnommen werden kann, ist jeder der Radbremsen 14A...14D je eine Sensoreinrichtung 16A...16D zugeordnet. Die Sensoreinrichtungen 16A...16D gestatten die radweise Bestimmung der Radumfangsgeschwindigkeit und des zugehörigen hydraulischen Radbremsdrucks.

Die erfindungsgemäße Fahrzeugbremsanlage 10 umfasst ferner eine zentrale Auswerte-Einrichtung 18, welche die Sensorsignale der Sensoreinrichtungen 16A...16D (genauer gesagt: die einzelnen Radumfangsgeschwindigkeiten und zugehörigen Radbremsdrücke) auswertet. Ziel dieser Auswertung ist es, das Auftreten oder bevorstehende Auftreten von Geräuschen zu erkennen.

Die Fahrzeugbremsanlage 10 gemäß Figur 1 besitzt ferner eine Bremsdruck-Regeleinrichtung 20 mit ABS/ESP-Funktionalität.

Üblicherweise sind Resonanzeffekte eine der Hauptursachen für das Auftreten unerwünschter Bremsengeräusche. Besonders anfällig für Resonanzeffekte ist hierbei das System Radbremse/Achsschenkel. Es hat sich herausgestellt, dass die Radbremsen 14A...14D und genauer gesagt deren Bremsbeläge aus mechanischer Sicht jeweils eine Feder mit vom Bremsdruck abhängigen Eigenschaften darstellen. Dies bewirkt, dass die Resonanzfrequenzen des System Radbremse/Achsschenkel eine Abhängigkeit vom Bremsdruck besitzen. Unerwünschte Resonanzeffekte und damit einhergehende Geräuschentwicklungen treten immer dann auf, wenn aufgrund einer Bremsdruckänderung eine Resonanzfrequenz in einen anregungskritischen Bereich geschoben wird, also z. B. wenn die Resonanzfrequenz einer bestimmten Radbremse/Achsschenkel-Kombination mit der Umfangsgeschwindigkeit des entsprechenden Rads korreliert.

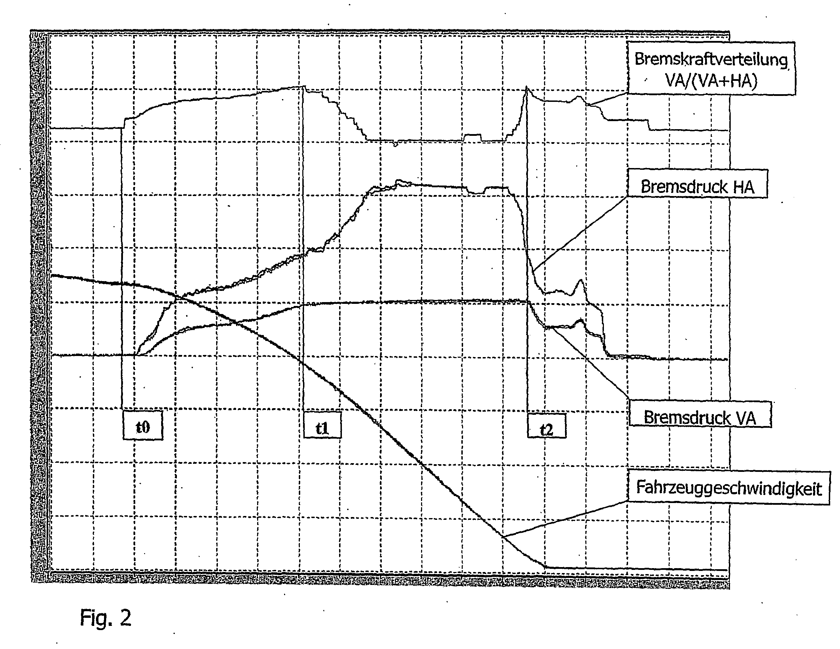

Zur Vermeidung von Resonanzeffekten und/oder unerwünschten Geräuschentwicklungen ist bei der Fahrzeugbremsanlage 10 gemäß dem ersten Ausführungsbeispiel vorgesehen, mittels der Auswerte-Einrichtung 18 kritische Kombinationen von Radumfangsgeschwindigkeit und zugehörigem Radbremsdruck bereits im Vorfeld einer resonanzbedingten Geräuschentwicklung zu erkennen. Sofern mit einer Geräuschentwicklung zu rechnen ist, wird mittels der Regeleinrichtung 20 derart Einfluss auf den Bremsdruck des betreffenden Rads genommen, dass während einer Bremsung kritische Kombinationen von Radumfangsgeschwindigkeit und zugehörigem Radbremsdruck verhindert werden. Dieser Vorgang des Verhinderns einer Geräuschentwicklung wird nunmehr unter Bezugnahme auf Figur 2 näher beschrieben.

Figur 2 zeigt ein Zeit-Diagram, das den erfindungsgemäßen automatischen Eingriff zum Verhindern einer Geräuschentwicklung verdeutlicht. In dem Zeit-Diagram von Figur 2 sind für einen beispielhaften Bremsvorgang die Kennlinien einiger den Bremsvorgang charakterisierender Parameter in relativen Einheiten dargestellt. Die oberste Kennlinie ist der zeitabhängige Verlauf der Bremskraftverteilung. Im Beispielfall ist die Bremskraftverteilung als der Quotient des Bremskraftanteils der Vorderachse VA zur Gesamtbremskraft an Vorder- und Hinterachse VA+HA definiert. Ursache für die achsbezogene Definition der Bremskraftverteilung ist die Tatsache, dass auch der Bremsdruck achsbezogen eingestellt wird. Sollte der Bremsdruck radbezogen eingestellt werden, könnte eine radbezogene Bremskraftverteilung definiert werden.

Unterhalb der Kennlinie der Bremskraftverteilung sind in dem Diagram von Figur 2 der zeitabhängige Verlauf des Bremsdrucks an der Hinterachse HA sowie (darunter) der zeitabhängige Verlauf des Bremsdrucks an der Vorderachse VA dargestellt. Die unterste Kennlinie spiegelt den zeitabhängigen Verlauf der Fahrzeuggeschwindigkeit wider. Deutlich zu erkennen ist die auf das Betätigen der Fahrzeugbremsanlage zurückgehende, im Wesentlichen gleichmäßige Abnahme der Fahrzeuggeschwindigkeit.

Wird zum Zeitpunkt t0 von einem Fahrer ein Bremsvorgang eingeleitet, steigen die Bremsdrücke an der Vorderachse und Hinterachse allmählich an. Gleichzeitig setzt eine Abnahme der Fahrzeuggeschwindigkeit ein. Die Bremskraftverteilung zeigt einen charakteristischen Verlauf, der mittels eines üblicherweise vorhandenen Bremskraftverteilers festgelegt ist.

Während des Bremsvorgangs erfolgt im Bereich jeder der vier Radbremsen 14A...14D der Fahrzeugbremsanlage 10 gemäß dem ersten Ausführungsbeispiel eine radbezogene Überwachung der Radumfangsgeschwindigkeit und des zugehörigen Radbremsdrucks oder, gleichbedeutend, der zugehörigen Radbremskraft. Die Überwachung geschieht mittels der mit den einzelnen Sensoreinrichtungen 16A...16D gekoppelten Auswerte-Einrichtung 18 für jedes Rad einzeln. In der Auswerte-Einrichtung 18 werden die von den Sensor-Einrichtungen 16A...16D erfassten Parameter Radumfangsgeschwindigkeit und Radbremsdruck mit vorher festgelegten Grenzwerten verglichen. Dabei ist vorgesehen, dass mittels der Auswerte-Einrichtung 18 die Bremsdruck-Regeleinrichtung 20 erst dann aktiviert wird, wenn bei einem Rad der Grenzwert der Bremskraft oder der Grenzwert der Radumfangsgeschwindigkeit überschritten wird. Es könnte auch vorgesehen werden, dass eine Aktivierung der Regeleinrichtung 20 erst dann erfolgt, wenn beide Grenzwerte überschritten werden. Auch wäre es denkbar, Radumfangsgeschwindigkeitsfenster und/oder Bremskraftfenster mit oberen und unteren Grenzwerten zu definieren. In diesem Fall erfolgt eine Aktivierung der Regeleinrichtung 20 nur dann, wenn einer der beiden relevanten Parameter oder beide Parameter innerhalb des durch die oberen und unteren Grenzwerte definierten kritischen Parameterbereichs liegt/liegen.

In dem in Figur 2 dargestellten Szenario wird zum Zeitpunkt t1 an den beiden Radbremsen 14A, 14B der Vorderachse VA ein Bremsdruck-Grenzwert erreicht, ab dessen Überschreitung Bremsgeräusche auftreten können. Die Auswerte-Einrichtung 18 aktiviert daher die Regeleinrichtung 20. Die Regeleinrichtung 20 erzeugt daraufhin Befehle zum Ändern einer standardmäßigen Bremskraftverteilung zwischen den Radbremsen der Vorderachse einerseits und den Radbremsen der Hinterachse andererseits. Die Befehle sind darauf ausgerichtet, dass zum einen der Bremsdruck an den geräuschkritischen Radbremsen 14A, 14B der Vorderachse VA den Bremsdruck-Grenzwert nicht überschreitet (Druckbegrenzung), andererseits sich der Bremsdruck an den Radbremsen 14C, 14D der Hinterachse HA aber in einem solchen Maße erhöht, dass sich die Summe der Bremsdrücke und damit die gewünschte Fahrzeugverzögerung nicht ändern. Der Fahrer des Kraftfahrzeugs spürt von dem automatischen Eingriff in die Bremskraftverteilung folglich nichts. Dies wird daran deutlich, dass die Fahrzeuggeschwindigkeit trotz des Regeleingriffes auch nach dem Zeitpunkt t1 mit im wesentlichen konstanter Steigung abfällt.

Zum Zeitpunkt t2 ist der Bremsvorgang soweit fortgeschritten, dass (auch) der Bremsdruck an den Radbremsen 14A, 14B der Vorderachse VA zurückgenommen werden kann. Mit anderen Worten, zum Zeitpunkt t2 kann wieder auf die ursprüngliche (standardmäßige) Bremskraftverteilung umgeschaltet werden.

Der erfindungsgemäße Eingriff in die Bremskraftverteilung findet folglich während der Zeitspanne t2-t1 statt. In dem Zeit-Diagram gemäß Figur 2 ist deutlich zu erkennen, dass sich während dieser Zeitspanne die Bremskraftverteilung zwischen den Radbremsen 14A...14D ändert. Es ist jedoch zu beachten, dass mit dem Eingriff in die Bremskraftverteilung zwischen t1 und t2 im Allgemeinen kein Eingriff in den Verlauf der Gesamtbremskraft verbunden ist. Aus diesem Grund kann mit dem Eingriff in die Bremskraftverteilung zwischen t1 und t2 das Entstehen unerwünschter Geräusche verhindert werden, ohne dass sich die vom Fahrer gewünschte (oder z.B. von einem Regelsystem eingestellte) Fahrzeugverzögerung ändert.

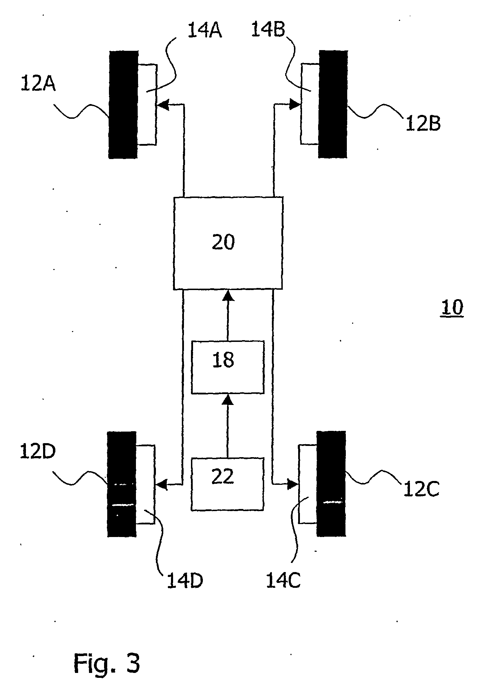

In Figur 3 ist eine weitere Fahrzeugbremsanlage 10 gemäß einem zweiten Ausführungsbeispiel der Erfindung dargestellt. Übereinstimmende Komponenten wurden mit denselben Bezugszeichen wie bei der Fahrzeugbremsanlage des ersten Ausführungsbeispiels bezeichnet.

Im Unterschied zum ersten Ausführungsbeispiel werden bei der in Figur 3 dargestellten Fahrzeugbremsanlage 10 die Bremsdrücke nicht achsweise, sondern radweise eingestellt. Ein weiterer Unterschied betrifft die Tatsache, dass im zweiten Ausführungsbeispiel die Geräuschentwicklung mittels eines Geräuschsensors 22 unmittelbar erfasst wird. Dies bedeutet, dass beim zweiten Ausführungsbeispiel eine Geräuschentwicklung nicht verhindert, sondern bereits aufgetretene Geräusche oder das Anschwellen bereits aufgetretener Geräusche unterdrückt werden sollen.

Wie Figur 3 entnommen werden kann, ist der Geräuschsensor 22 (z. B. ein Mikrofon) im Bereich der Radbremsen 14C, 14D der Hinterachse angeordnet. Das Ausgangssignal des Geräuschsensors 22 wird von der Auswerte-Einrichtung 18 ausgewertet. Die Auswertung ist auf das Erkennen des Erreichens eines Geräusch-Schwellenwerts gerichtet. Wird der Geräusch-Schwellenwert erreicht, aktiviert die Auswerte-Einrichtung 18 die Regeleinrichtung 20 und es kommt zu dem in Figur 2 dargestellten und bereits erörterten Regeleingriff.

Hinsichtlich der Ausgestaltung des Geräuschssensors 22 stehen unterschiedliche Möglichkeiten zur Verfügung. So ist es denkbar, den Geräuschsensor 22 in einen Bremsbelag-Verschleißsensor zu integrieren. Eine andere Möglichkeit besteht darin, Geräuschsensoren an den einzelnen Fahrzeugrädern anzubringen und die von den Geräuschsensoren erzeugten Signale in Radumfangsgeschwindigkeitssensoren einzukoppeln und gemeinsam mit Signalen dieser Sensoren zu übertragen. Als Geräuschsensoren können beispielsweise Piezo-Elemente zum Einsatz gelangen.

Nachfolgend werden einige Ausgestaltungen der Erfindung beschrieben, die sowohl für die Fahrzeugbremsanlage gemäß dem ersten Ausführungsbeispiel als auch für Fahrzeugbremsanlage gemäß dem zweiten Ausführungsbeispiel gelten.

So hat es sich als zweckmäßig erwiesen, zur Erkennung des Auftretens oder des bevorstehenden Auftretens von Geräuschen weitere Parameter wie die Fahrzeugbeladung, die statische und dynamische Kraftverteilung des Fahrzeugs, Bergauf- bzw. Bergabbremsungen, Kurvenbremsungen mit erhöhter Querbeschleunigung und Bremsungen auf sogenannten Split Mue-Fahrbahnen, usw. mit zu berücksichtigen. Diese Informationen werden von üblicherweise bereits vorhandenen Bremsdruck-Regeleinrichtungen mit ESP-Funktionalität erzeugt.

Weiterhin hat sich herausgestellt, dass bei stabilitätskritischen Bremsungen oder Fahrmanövern, die zur Aktivierung sicherheitsrelevanter Regelmechanismen wie ESP oder ABS führen, diesen Regelmechanismen der Vorrang vor den vorstehend beschriebenen, geräuschreduzierenden Regelmechanismen gegeben werden sollte. Mit anderen Worten, Sicherheitsaspekte sollten nicht zugunsten von Komfortaspekten vernachlässigt werden.

Um einen ungleichmäßigen Verschleiß der Bremsbeläge zu vermeiden, können die Eingriffe in die Bremskraftverteilung derart erfolgen, dass im Bereich einer bestimmten Radbremse bei aufeinanderfolgenden, geräuschbedingten Änderungen der Bremskraftverteilung die Bremskraft abwechselnd erhöht und erniedrigt wird. Werden beispielsweise bei einem Eingriff in die Bremskraftverteilung an bestimmten Rädern die Bremskräfte abgesenkt und an anderen Rädern die Bremskräfte erhöht, so sollte bei dem nächsten geräuschbedingten Eingriff in die Bremskraftverteilung an den einzelnen Rädern Bremskraftänderungen in die umgekehrte Richtung zum Ausregeln herangezogen werden.

Die von der Auswerte-Einrichtung zum Auswerten der Sensorsignale herangezogenen Vergleichskurven können bereits während der Bremsenkonstruktion ermittelt und anschließend in der Auswerte-Einrichtung oder einer separaten Einrichtung abgespeichert werden. Die Vergleichsgrößen können nach Auslieferung des Fahrzeugs bei Werkstattaufenthalten (z.B. Fahrzeugservice) erforderlichenfalls geändert bzw. angepasst werden. Zu diesem Zweck kann die Auswerte-Einrichtung oder die separate Einrichtung mit einem Interface versehen werden, das einen Zugriff auf Speicherbereiche zum Zweck einer Änderung oder Ergänzung relevanter Parameter, Kennfelder (z.B. einer look-up table) usw. ermöglicht.

Die im Rahmen der Erkennung des Auftretens oder des bevorstehenden Auftretens von Geräuschen in z.B. einer look-up table abgespeicherten Parameter können einen oder mehrere der Werte Radbremsdruck, Radgeschwindigkeit (Raddrehzahl), Temperatur, Bremsenabnutzung (z.B. zeitlicher Faktor, Bremsenabrieb oder Lauf-leistung) beinhalten. Auch ist es denkbar, bei einem Wechsel von Komponenten der Bremsanlage wie z.B. der Bremsbeläge über das Interface neue Parameter, Kennlinien, usw. zu laden, welche die charakteristischen Eigenschaften der ausgetauschten Komponente berücksichtigen.

Im Vergleich zur Geräuschdämmung mittels zusätzlicher Massen gestattet der Eingriff in die Bremskraftverteilung eine Verkürzung der Entwicklungszeiten und eine Verringerung des Treibstoffverbrauchs. Gleichwohl ist es nicht ausgeschlossen, zur besonders effektiven Geräuschreduzierung den erfindungsgemäßen Eingriff in die Bremskraftverteilung mit dem Vorsehen zusätzlicher Massen zu kombinieren.

## Patentansprüche

1. Verfahren zum automatischen Unterdrücken oder Verhindern von Geräuschentwicklungen beim Betätigen einer zwei oder mehr Radbremsen (14A...14D) umfassenden Fahrzeugbremsanlage (10), mit den Schritten:
- Erzeugen von Bremskräften mittels der Radbremsen (14A...14D);
- Erfassen mindestens eines Parameters, der einen Rückschluss auf eine mögliche Geräuschentwicklung gestattet;
- Auswerten des Parameters zur Erkennung des Auftretens oder des bevorstehenden Auftretens von Geräuschen;
**gekennzeichnet durch** den Schritt des Änderns einer Bremskraftverteilung, falls die Auswertung das Auftreten oder das bevorstehende Auftreten von Geräuschen erkennen lässt, wobei die Bremskraftverteilung unter Beibehaltung einer gewünschten oder eingestellten Fahrzeugverzögerung geändert wird.

2. Verfahren gemäß Anspruch 1, **dadurch gekennzeichnet, dass** von der Änderung der Bremskraftverteilung auch mindestens eine Radbremse umfasst ist, bei der keine Geräuschentwicklung auftritt oder zu erwarten ist.

3. Verfahren nach Anspruch 1 oder 2, **dadurch gekennzeichnet, dass** das Ändern der Bremskraftverteilung das Verhindern eines weiteren Anstiegs des Bremsdrucks an einer von der Geräuschentwicklung betroffenen Radbremse umfasst.

4. Verfahren nach einem der Ansprüche 1 bis 3, **dadurch gekennzeichnet, dass** der mindestens eine Parameter hinsichtlich des Vorliegens oder des bevorstehenden Eintretens einer kritischen Bedingung ausgewertet wird und das Ändern der Bremskraftverteilung darauf gerichtet ist, dass die kritische Bedingung nicht mehr erfüllt oder deren Eintritt verhindert wird.

5. Verfahren nach einem der Ansprüche 1 bis 4, **dadurch gekennzeichnet, dass** bei aufeinanderfolgenden, geräuschbedingten Änderungen der Bremskraftverteilung die Bremskraft an einer der Radbremsen (14A...14D) oder Achsen im Allgemeinen abwechselnd erhöht und erniedrigt wird.

6. Verfahren nach einem der Ansprüche 1 bis 5, **dadurch gekennzeichnet, dass** zum Ändern der Bremskraftverteilung auf eine oder mehrere auch für andere Zwecke vorgesehene Bremsdruck-Regeleinrichtungen (20) wie ABS, ASR oder ESP zurückgegriffen wird.

7. Verfahren nach einem der Ansprüche 1 bis 6, **dadurch gekennzeichnet, dass** das Ändern der Bremskraftverteilung auf geregelte Weise unter Berücksichtigung einer daraus resultierenden Änderung des mindestens einen erfassten Parameters erfolgt.

8. Verfahren nach einem der Ansprüche 1 bis 7, **dadurch gekennzeichnet, dass** die Geräuschentwicklung unmittelbar erfasst wird.

9. Verfahren nach einem der Ansprüche 1 bis 8, **dadurch gekennzeichnet, dass** wenigstens einer der Parameter Radumfangsgeschwindigkeit, Radbremskraft und Radbremsdruck erfasst wird.

10. Verfahren nach einem der Ansprüche 1 bis 9, **dadurch gekennzeichnet, dass** das Erfassen und/oder Auswerten des mindestens einen Parameters radbezogen erfolgt.

11. Verfahren nach einem der Ansprüche 1 bis 9, **dadurch gekennzeichnet, dass** das Erfassen und/oder Auswerten des mindestens einen Parameters achsbezogen erfolgt.

12. Verfahren nach einem der Ansprüche 1 bis 11, **dadurch gekennzeichnet, dass** das Ändern der Bremskraftverteilung achsbezogen erfolgt.

13. Verfahren nach einem der Ansprüche 1 bis 11, **dadurch gekennzeichnet, dass** das Ändern der Bremskraftverteilung radbezogen erfolgt.

14. Fahrzeugbremsanlage (10), umfassend
- zwei oder mehr Radbremsen (14A...14D);
- mindestens einen Sensor (16A...16D, 22) zur Erfassung mindestens eines Parameters, der einen Rückschluss auf eine mögliche Geräuschentwicklung gestattet;
- eine Auswerte-Einrichtung (18) zur Auswertung des mindestens einen Parameters hinsichtlich des Auftretens oder bevorstehenden Auftretens von Geräuschen;
**gekennzeichnet durch** eine Befehlserzeugungs-Einrichtung (20) zur Erzeugung von Befehlen zum Ändern einer Bremskraftverteilung, falls die Auswertung das Auftreten oder das bevorstehende Auftreten von Geräuschen erkennen lässt, wobei die Änderung der Bremskraftverteilung unter Beibehaltung einer gewünschten Fahrzeugverzögerung erfolgt.

15. Fahrzeugbremsanlage nach Anspruch 14, **dadurch gekennzeichnet, dass** die Fahrzeugbremsanlage (10) auf dem Prinzip des brake-by-wire basiert.

16. Fahrzeugbremsanlage nach Anspruch 14 oder 15, **dadurch gekennzeichnet, dass** die Befehlserzeugungs-Einrichtung (20) eine oder mehrere auch für andere Zwecke vorgesehene Bremsdruck-Regeleinrichtungen wie ABS, ASR oder ESP umfasst.

## Claims

1. Method of automatically suppressing or preventing noise generation during the actuation of a vehicle brake system (10) comprising one or more wheel brakes (14A...14D), having the steps of:
- generating brake forces by means of the wheel brakes (14A...14D);
- acquiring at least one parameter that allows a conclusion to be drawn about possible noise generation;
- evaluating the parameter to detect the occurrence or imminent occurrence of noises;
**characterized by** the step of changing a brake force distribution if the evaluation reveals the occurrence or imminent occurrence of noises, wherein the brake force distribution is changed while simultaneously retaining a desired or set vehicle deceleration.

2. Method according to claim 1, **characterized in that** the change of the brake force distribution also includes at least one wheel brake, at which no noise generation occurs or is to be expected.

3. Method according to claim 1 or 2, **characterized in that** changing of the brake force distribution includes the preventing of a further rise of the brake pressure at a wheel brake affected by the noise generation.

4. Method according to one of claims 1 to 3, **characterized in that** the at least one parameter is evaluated for the existence or imminent occurrence of a critical condition and the changing of the brake force distribution is geared towards the critical condition being no longer met or its occurrence being prevented.

5. Method according to one of claims 1 to 4, **characterized in that**, in the event of successive, noise-related changes of the brake force distribution, the brake force at one of the wheel brakes (14A...14D) or axles is generally alternately increased and reduced.

6. Method according to one of claims 1 to 5, **characterized in that** to change the brake force distribution use is made of one or more brake pressure regulating devices (20) that are provided also for other purposes, such as ABS, TCS or ESP.

7. Method according to one of claims 1 to 6, **characterized in that** changing of the brake force distribution is effected in a controlled manner that simultaneously takes into consideration a resulting change of the at least one acquired parameter.

8. Method according to one of claims 1 to 7, **characterized in that** the noise generation is directly acquired.

9. Method according to one of claims 1 to 8, **characterized in that** at least one of the parameters: wheel peripheral speed, wheel brake force and wheel brake pressure is acquired.

10. Method according to one of claims 1 to 9, **characterized in that** the acquisition and/or evaluation of the at least one parameter is effected in a wheel-related manner.

11. Method according to one of claims 1 to 9, **characterized in that** the acquisition and/or evaluation of the at least one parameter is effected in an axle-related manner.

12. Method according to one of claims 1 to 11, **characterized in that** changing of the brake force distribution is effected in an axle-related manner.

13. Method according to one of claims 1 to 11, **characterized in that** changing of the brake force distribution is effected in a wheel-related manner.

14. Vehicle brake system (10), comprising
- two or more wheel brakes (14A...14D);
- at least one sensor (16A...16D, 22) for acquiring at least one parameter that allows a conclusion to be drawn about possible noise generation;
- an evaluation device (18) for evaluating the at least one parameter for the occurrence or imminent occurrence of noises;
**characterized by** a command generating device (20) for generating commands to change a brake force distribution if the evaluation reveals the occurrence or imminent occurrence of noises, wherein the change of the brake force distribution is effected while simultaneously retaining a desired vehicle deceleration.

15. Vehicle brake system according to claim 14, **characterized in that** the vehicle brake system (10) is based on the brake-by-wire principle.

16. Vehicle brake system according to claim 14 or 15, **characterized in that** the command generating device (20) comprises one or more brake pressure regulating devices provided also for other purposes, such as ABS, TCS or ESP.

## Revendications

1. Procédé pour empêcher ou atténuer automatiquement la formation de bruits lors de l'actionnement d'un système de freinage de véhicule (10) comprenant deux ou plusieurs freins de roue (14A...14D), comportant les étapes suivantes :
- production de forces de freinage par l'intermédiaire des freins de roue (14A...14D) ;
- détection d'au moins un paramètre permettant de conclure à une formation de bruits possible ;
- évaluation du paramètre pour identifier l'apparition ou l'apparition imminente de bruits ;
**caractérisé par** l'étape consistant à modifier la répartition de la force de freinage si, à la suite de l'évaluation, l'apparition ou l'apparition imminente de bruits est identifiée, la modification de la répartition de la force de freinage étant opérée en maintenant une décélération souhaitée ou réglée du véhicule.

2. Procédé selon la revendication 1, **caractérisé en ce que** la modification de la répartition de la force de freinage englobe également au moins un frein de roue sur lequel il n'y a pas formation de bruits ou il ne faut s'attendre à aucune formation de bruits.

3. Procédé selon la revendication 1 ou 2, **caractérisé en ce que** la modification de la répartition de la force de freinage comprend le fait d'empêcher une augmentation supplémentaire de la pression de freinage sur un frein de roue concerné par la formation de bruits.

4. Procédé selon l'une des revendications 1 à 3, **caractérisé en ce qu'**il y a évaluation d'au moins un paramètre concernant l'existence ou l'apparition imminente d'une condition critique et que la modification de la répartition de la force de freinage a pour but de supprimer la condition critique existante ou d'empêcher son apparition.

5. Procédé selon l'une des revendications 1 à 4, **caractérisé en ce que**, dans le cas de modifications successives de la répartition de la force de freinage à la suite de bruits, la force de freinage est en général augmentée et diminuée alternativement à l'un des freins de roue (14A...14D) ou des essieux.

6. Procédé selon l'une des revendications 1 à 5, **caractérisé en ce que**, pour modifier la répartition de la force de freinage, il est fait appel à un ou plusieurs dispositifs de réglage de la pression de freinage (20), tels que ABS, ASR ou ESP, également prévus à d'autres fins.

7. Procédé selon l'une des revendications 1 à 6, **caractérisé en ce que** la modification de la répartition de la force de freinage s'opère de manière réglée compte tenu du changement d'au moins un paramètre détecté qui en résulte.

8. Procédé selon l'une des revendications 1 à 7, **caractérisé en ce que** la formation de bruits est détectée directement.

9. Procédé selon l'une des revendications 1 à 8, **caractérisé en ce qu'**il y a détection d'au moins un des paramètres 'vitesse circonférentielle de la roue', 'force de freinage sur la roue' et 'pression de freinage sur la roue'.

10. Procédé selon l'une des revendications 1 à 9, **caractérisé en ce que** la détection et/ou l'évaluation d'au moins un paramètre s'effectuent par rapport à une roue.

11. Procédé selon l'une des revendications 1 à 9, **caractérisé en ce que** la détection et/ou l'évaluation d'au moins un paramètre s'effectuent par rapport à un essieu.

12. Procédé selon l'une des revendications 1 à 11, **caractérisé en ce que** la modification de la répartition de la force de freinage s'effectue par rapport à un essieu.

13. Procédé selon l'une des revendications 1 à 11, **caractérisé en ce que** la modification de la répartition de la force de freinage s'effectue par rapport à une roue.

14. Système de freinage de véhicule (10), comprenant
- deux ou plusieurs freins de roue (14A...14D) ;
- au moins un capteur (16A...16D, 22) pour la détection d'au moins un paramètre permettant de conclure à une formation de bruits possible ;
- un dispositif d'évaluation (18) pour l'évaluation d'au moins un paramètre concernant l'apparition ou l'apparition imminente de bruits ;
**caractérisé par** un dispositif générateur d'instructions (20) servant à générer des instructions pour modifier la répartition de la force de freinage si, à la suite de l'évaluation, l'apparition ou l'apparition imminente de bruits est identifiée, la modification de la répartition de la force de freinage étant opérée en maintenant une décélération souhaitée du véhicule.

15. Système de freinage de véhicule selon la revendication 14, **caractérisé en ce que** le système de freinage de véhicule (10) est basé sur le principe du brake-by-wire.

16. Système de freinage de véhicule selon la revendication 14 ou 15, **caractérisé en ce que** le dispositif générateur d'instructions (20) englobe un ou plusieurs dispositifs de réglage de la pression de freinage, tels que ABS, ASR ou ESP, également prévus à d'autres fins.
